Europäisches Patentamt

European Patent Office

Office européen des brevets

(11) Veröffentlichungsnummer: **0 355 327**
**A2**

## (12) EUROPÄISCHE PATENTANMELDUNG

(21) Anmeldenummer: 89111900.0

(22) Anmeldetag: 30.06.89

(51) Int. Cl.⁴: **B01D 17/025** , **B01D 21/00** , **E03F 5/16**

(30) Priorität: 20.08.88 DE 3828326

(43) Veröffentlichungstag der Anmeldung:
**28.02.90 Patentblatt 90/09**

(84) Benannte Vertragsstaaten:
**AT BE CH DE FR GB IT LI NL SE**

(71) Anmelder: **Kessel, Bernhard**
**Bahnhofstrasse 31**
**D-8071 Lenting(DE)**

(72) Erfinder: **Kessel, Bernhard**
**Bahnhofstrasse 31**
**D-8071 Lenting(DE)**

(74) Vertreter: **Sasse, Volker, Dipl.-Ing.**
**Parreutstrasse 27**
**D-8070 Ingolstadt(DE)**

(54) **Fettabscheider.**

(57) Bei einem Fettabscheider (1, 1′) mit Schlamm-fangkammer (3) und einer Abscheidekammer (4) so-wie wenigstens einer Pumpe (14, 4a, 14b), die druckseitig über eine Verteilervorrichtung (18, 18a, 18b) wahlweise mindestens an eine Entsorgungsleitung, eine Zirkulationsleitung oder an eine Aufbrech-leitung anschließbar ist, deren Anschlußmündungen in einer Führungsbahn im Behälterinneren nebenein-anderliegend angeordnet sind und mit einem um eine Drehachse verschwenkbaren, mit der Drucksei-te der Pumpe verbundenen Rohrelement wahlweise ausrichtbar sind, wird als Rohrelement eine in der Verteilervorrichtung (18, 18a, 18b) bewegbar gela-gerter Druckstutzen (23) vorgesehen, der mit einem stationären Druckrohr der Pumpe über eine Drehver-bindung (V) gekuppelt ist, wobei die Drehachse der Drehverbindung horizontal liegt und die Drehachse (D) für die Schwenkbewegung des Druckstutzens bildet.

FIG 1

EP 0 355 327 A2

Die Erfindung betrifft einen Fettabscheider der im Oberbegriff des Patentanspruchs 1 angegebenen Art.

Bei einem aus der P 37 08 557.3 bekannten Fettabscheider dieser Art wird die Druckleitung der Pumpe zusammen mit der Pumpe um eine vertikale Drehachse verdreht, damit eine Strömungsverbindung zu jeweils einer der drei Leitungen hergestellt ist. Das Gewicht und der Widerstand der zum Verstellen der Verteilervorrichtung bewegten Komponenten sind beträchtlich. Die Bedienung ist deshalb kraftraubend. Bei großen Fettabscheidern muß die Bedienungsperson auf den Behälter klettern. Wegen der Größe der bewegten Komponenten übt auch die Masse in der Schlammfangkammer einen beträchtlichen Drehwiderstand aus, der die Verstellung behindern kann. Wegen der großen, beim Verstellen auftretenden Reibung und Kräfte zwischen den beweglichen Komponenten und dem stationären Teil des Fettabscheiders tritt ein beträchtlicher Verschleiß auf. Schließlich sind wegen der bewegbaren Lagerung der Pumpe mit ihrem Druckrohr beim Arbeiten der Pumpe kräftige und ggfs. geräuscherzeugende Erschütterungen nicht zu vermeiden.

Bei einer aus der DE-AS 2 519 398 bekannten Vorrichtung zum Entleeren eines Fettabscheiders sind für beide Kammern getrennte Pumpen vorgesehen, von denen sich Saugrohre in die jeweilige Kammer erstrecken. Zum wahlweisen Zirkulieren der Flüssigkeit, Aufreißen der Schwimmstoffschicht oder Entsorgen des Kammerinhalts sind die Pumpen über ein Rohrleitungssystem miteinander und mit der Entsorgungsleitung sowie den Kammern verbindbar und zwar mittels Mehrwegeventilen in den Rohrleitungs-Verknüpfungspunkten. Wegen der Konsistenz der zu pumpenden Flüssigkeit sind diese Mehrwegeventile aufwendig aufgebaut und schwierig zu betätigen. Sie bilden ferner leistungsmindernde Drosselstellen in dem Rohrsystem. Das gilt auch für einen Fettabscheider gemäß dem DE-GM 88 01 755, bei dem zum Entsorgen zwei Pumpen hintereinander geschaltet werden, um wirkungsvoll entsorgen zu können. Auch hierbei sind aufwendige und die Funktionssicherheit des Fettabscheiders gefährdende Wegeventile erforderlich.

Der Erfindung liegt die Aufgabe zugrunde, einen Fettabscheider der eingangs genannten Art zu schaffen, der trotz baulicher Einfachheit auch grobe Verun reinigungen funktionssicher entsorgen läßt, dabei leistungsfähig und bedienungsfreundlich ist.

Die gestellte Aufgabe wird erfindungsgemäß mit den im kennzeichnenden Teil des Patentanspruchs 1 angegebenen Merkmalen gelöst.

Bei dieser Ausbildung werden keine störungsanfälligen Wegeventile üblicher Bauart mehr benötigt. Es ist auch nicht erforderlich, zum Betätigen der Verteilervorrichtung die Pumpe zu bewegen, sondern es wird nur der relativ kleine Druckstutzen in der Verteilervorrichtung bewegt, um die Pumpe mit der jeweils zu beaufschlagenden Leitung zu verbinden. Das Schwenken des Druckstutzens läßt sich mit geringem Kraftaufwand und auch bei großem Behälter von der Behälterseite her durchführen, weil die Drehachse für den Druckstutzen horizontal liegt. Es ergibt sich ein günstig kleiner Hebelarm für den Widerstand des Druckstutzens gegen die Schwenkbewegung, während für das Verschwenken des Druckstutzens ein großer Hebelarm gewählt werden kann. Dadurch ist die Verteilervorrichtung bedienungsfreundlich. Etwaige Ablagerungen im Bereich der Drehverbindung und der Führungsbahn für die Mündung des Druckstutzens werden beiseite gedrückt oder abgeschert. Die Strömung wird nur gering umgelenkt, was die Drosselverluste reduziert. Da nur der Druckstutzen bewegt zu werden braucht, was mit geringer Kraft und auch über einen beträchtlichen Weg möglich ist, läßt sich eine große Durchgangsweite für den Druckstutzen und die einzelnen Leitungen wählen, so daß eine leistungsfähige Pumpe benutzt werden kann und einen hohen Durchsatz beim Entsorgen, Aufbrechen oder Zirkulieren ermöglicht. Die Verteilervorrichtung beansprucht nur geringen Platz im Behälter, so daß dessen Fassungsvermögen optimal nutzbar ist. Die außenliegende Pumpe mit dem Druckrohr kann leicht gewartet werden. Winkel und enge Räume im Behälterinneren, in denen sich Fleisch, Knochen, Fellstücke oder dgl. festsetzen können, werden bei dieser Bauweise vermieden.

Eine zweckmäßige Ausführungsform geht aus Anspruch 2 hervor. Der 90°-Rohrkrümmer schafft die ideale Voraussetzung für einen kleinen, verschwenkbaren Teil in der Verteilervorrichtung, dessen eine Ende in der Drehverbindung drehbar ist, während sein anderes Ende über die Mündungen in der Führungsbahn verschwenkt wird.

Alternativ ist auch die Ausführungsform von Anspruch 3 zweckmäßig, weil bei Verwendung eines Kugelgelenks als Druckstutzen ein gerades Rohrstück verwendbar ist, mit dem die erforderlichen Verstellbewegungen besonders einfach durchführbar sind. Das Kugelgelenk als Drehverbindung sorgt für die ausreichende Dichtigkeit.

Eine herstellungstechnisch und hinsichtlich der Montage günstige Ausführungsform geht ferner aus Anspruch 4 hervor. Durch den Abstand zwischen der Drehachse des Druckstutzens und der Betätigungswelle wird ein zum leichtgängigen Verschwenken des Druckstutzens nutzbarer, großer Hebelarm geschaffen. Da die Betätigungswelle seitlich aus dem Behälter herausgeführt ist, braucht zum Betätigen der Verstellvorrichtung nicht auf den Fettabscheider geklettert zu werden. Die Stellung des Druckstutzens ist außen optisch jederzeit zu ersehen.

Bezüglich des großen Hebelarms zum Verschwenken des Druckstutzens ist ferner die Ausführungsform von Anspruch 5 günstig. Der größte Bewegungswiderstand wird dem Druckstutzen im Bereich seiner Mündung entgegenstehen. Da hier der Mitnehmer angreift, werden unerwünschte exzentrische Belastungen vermieden.

Eine besonders wichtige Ausführungsform geht aus Anspruch 6 hervor. Die Druckkompensationsvorrichtung ermöglicht es einerseits, den Druckstutzen auch bei laufender Pumpe noch leichtgängig zu verstellen, weil die aus dem dynamischen Druck resultierenden Kräfte kompensiert werden, und sorgt andererseits dafür, daß sich bei laufender Pumpe der Druckstutzen nicht unzweckmäßig innerhalb der Verteilervorrichtung verlagern und damit verklemmen kann.

Die Druckkompensationsvorrichtung kann sich im Gehäuse der Verteilervorrichtung abstützen, wo die auftretenden Kräfte wirkungsvoll aufgenommen werden.

Bei der Ausführungsform gemäß Anspruch 7 ergibt sich eine leichtgängige Bewegung für den Druckstutzen, weil die Führungsbahn einen harmonischen Verlauf hat. Eventuell die verschiedenen Stellungen des Druckstutzens sichernde Rastvorrichtungen werden zweckmäßigerweise in der Verteilervorrichtung dort vorgesehen, wo die verschmutzte, gepumpte Flüssigkeit nicht hingelangt. Die Rinne hat den Vorteil, daß sie eine zusätzliche Führung für den Druckstutzen bewirkt.

Besonders wichtig ist das Merkmal von Anspruch 8, weil das gefederte Mundstück die erforderliche Dichtwirkung erbringt und die Verteilervorrichtung unempfindlich gegen eingeklemmte Feststoffe macht. Das Mundstück kann dank seiner Federung in einem solchen Fall ausweichen. Ferner hat die gefederte Lagerung des Mundstückes den Vorteil, daß geringfügige Fluchtungsfehler zwischen der Auslaßmündung jeder Leitung und der Mündung des Druckstutzens ausgeglichen werden. Ferner ist das Mundstück ein leicht auswechselbares Verschleißteil, das vom Material und der Konstruktion her von vornherein auf die in diesem Bereich hohen Anforderungen abgestellt wird.

Eine weitere Ausführungsform, mit eigenständiger erfinderischer Bedeutung, bei der in der Trennwand bodennahe wenigstens eine Öffnung mit einer zwischen einer Schließ- und Öffnungsstellung bewegbaren Klappe vorgesehen ist, geht aus Anspruch 9 hervor. Die Zwangssteuerung für die Bewegung der Klappe hat den Vorteil, daß die Klappenbewegung nicht in Abhängigkeit von Druckunterschieden zwischen den Kammern stattfindet, sondern genau gesteuert mit der jeweiligen Einstellung der Verteilervorrichtung. Es kann nämlich durchaus der Fall eintreten, daß zunächst die Schlammfangkammer leergepumpt werden soll, ehe der Inhalt aus der Abscheidekammer entsorgt wird. Mit der Zwangssteuerung für die Klappenbewegung kann die Verbindung von der Abscheidekammer zur Schlammfangkammer willkürlich blockiert oder freigegeben werden, je nachdem, wie es für eine optimale Reinigung oder Entsorgung zweckmäßig sein sollte. Dabei hat es sich als vorteilhaft erwiesen, wenn hier selbsttätig dafür gesorgt wird, daß der Inhalt der Abscheidekammer nur in bestimmten Stellungen der Verteilervorrichtung in die Schlammfangkammer eindringt und nicht unkontrolliert oder selbsttätig ein Überströmen stattfindet. Mit den in Anspruch 9 genannten Merkmalen ist es möglich, zunächst die Schlammfangkammer zu leeren oder weitgehend zu leeren und erst dann die Klappe aufgehen zu lassen, wenn Gefahr besteht, daß die Pumpe aus der Schlammfangkammer Luft ansaugt. Es wird auf diese Weise eine Stufenschaltung bei der Absaugung oder Entsorgung erreicht.

Eine weitere, vereinfachte Ausführungsform geht alternativ aus Anspruch 10 hervor. Hier läßt sich die Klappe unabhängig von der jeweiligen Stellung der Verteilervorrichtung von außen öffnen oder schließen. Hierfür ist an die Verwendung eines Stellantriebes gedacht. Die Bedienungsfreundlichkeit wird dadurch erhöht, weil sowohl die Verteilervorrichtung als auch die Klappe, z.B. durch Knopfdruck, mittels des oder der Stellantriebe betätigt werden. Mit diesen Stellantrieben lassen sich auch exakt die Schaltpositionen reproduzierbar einstellen, so daß die Bedienungsperson hier keine besondere Sorgfalt auf die funktionsgerechte Betätigung zu legen braucht.

Eine weitere, besonders wichtige Ausführungsform mit eigenständiger erfinderischer Bedeutung geht aus Anspruch 11 hervor. Bei diesem ohne Verbindungsklappe zwischen Schlammfangkammer und Abscheidekammer arbeitendem Fettabscheider lassen sich hohe Förderleistungen beim Entsorgen, Zirkulieren und Aufreißen erreichen, da die beiden Pumpen, die alternierend oder gleichzeitig betrieben werden können, einander unterstützen. Jede Pumpe kann so betätigt werden, daß sie in der ihr zugehörigen Kammer arbeitet. Beim Entsorgen kann die Füllung der Abscheidekammer in die Schlammfangkammer umgepumpt und von dieser durch die erste Pumpe entsorgt werden. Jede Pumpe kann in ihrer Kammer aufbrechen oder zirkulieren. Die jeweils dünnflüssigere Füllung kann auch in der anderen Kammer für Aufbrech-, Zirkulations- oder Spülzwecke eingesetzt werden. Ein Entsorgen ist auch aus jeder Kammer möglich.

Bei der Ausführungsform gemäß Anspruch 12 pumpt die zweite Pumpe den Inhalt der Abscheidekammer zum Entsorgen in die Schlammfangkammer zurück, von der sie durch die erste Pumpe entsorgt wird. Es läßt sich auf diese Weise eine höhere Entsorgungsleistung und bessere Entleerung der Kammern erreichen.

Bei einer alternativen Ausführungsform gemäß Anspruch 13 entsorgt jede Pumpe ihre Kammer, so daß bei gleichzeitigem Betrieb der Pumpen eine rasche Entsorgung erreichbar ist.

Bei der vorteilhaften Ausführungsform gemäß Anspruch 14 wird der Leistungsverlust vermieden, der beim vorhergehenden Ausführungsbeispiel durch die Ent sorgung über die erste Pumpe gegeben ist, denn die Füllung aus der Schlammfangkammer wird an der ersten Pumpe vorbei direkt in die Entsorgungsleitung geführt. Ein Wechselventil oder ·Rückschlagventile in den Rohren stellen sicher, daß bei Stillstand oder Ausfall einer Pumpe die zweite Pumpe beim Entsorgen wieder in den Behälter zurückfördert.

Eine weitere, vorteilhafte Ausführungsform geht aus Anspruch 15 hervor. Hier wird auch bei groß dimensionierter Schlammfangkammer eine Aufreiß oder Aufbrechwirkung für die im Oberflächenbereich sich verfestigende Schicht erreicht, weil mittels des Tellerventils von der ersten Pumpe Flüssigkeit zum Aufsprengen dieser verdickten Schicht einsetzbar ist. Denkbar ist es auch, zunächst mit der ersten Pumpe in der Schlammfangkammer die Füllung zirkulieren zu lassen, um zumindest im unteren Teil eine emulsionsartige Flüssigkeit zu erzeugen, und dann erst mit dieser emulsionsartigen Flüssigkeit über das Tellerventil die obere Schicht aufzubrechen. Denkbar wäre auch, den mit Feststoffen angereicherten Sumpf zu entsorgen und dann die verbleibende Flüssigkeit über das Tellerventil zum Aufreißen der hartgewordenen Schwimmstoffschicht zu nutzen.

Ein weiterer, zweckmäßiger Gedanke ist in Anspruch 16 enthalten. Hier wird zum Aufbrechen der Schlammfangkammer die ggfs. dünnflüssige Füllung der Abscheidekammer eingesetzt.

Wichtig ist ferner das Merkmal von Anspruch 17, weil diese Zerförderer die festen Bestandteile der Füllungen aufarbeiten und·so rasch emulsionsartige Flüssigkeiten erzeugen, die sich leicht entsorgen lassen und auch zum Aufbrechen bzw. Spülen geeignet sind.

Schließlich kann es für die Vorrichtung von Vorteil sein, einen Absperrschieber zwischen Pumpe und Saugleitung zu setzen, weil der Absperrschieber es gestattet, die jeweils nicht benutzte Pumpe und deren Druckleitung vom Behälter abzutrennen, z.B. während des normalen Betriebs des Fettabscheiders vor der Entsorgung und Spülung. Die Absperrschieber sind auch dann zweckmäßig, wenn nach dem Entsorgen der Behälter zu Reinigungszwecken mit einer externen Spülflüssigkeit gespült wird, die über dieselbe Pumpe oder die beiden Pumpen bei abgesperrter Saugseite von außen in den Behälter gepumpt wird.

Anhand der Zeichnung werden beispielhafte Ausführungsformen des Erfindungsgegenstandes erläutert.

Es zeigen

Fig. 1 eine Seitenansicht, teilweise aufgeschnitten, einer ersten Ausführungsform eines Fettabscheiders,

Fig. 2 eine entsprechende Seitenansicht einer weiteren Ausführungsform,

Fig. 3 einen Teil eines Schnittes in der Ebene III-III in den Figuren 1 und 2, mit einer Modifikation,

Fig. 4 eine um 90° gedrehte Ansicht des Details von Fig. 3,

Fig. 5 eine Draufsicht auf das Detail von Fig. 4,

Fig. 6 einen Schnitt in der Ebene VI-VI in Fig. 3 und

Fig. 7 einen Schnitt in der Ebene VII-VII von Fig. 4.

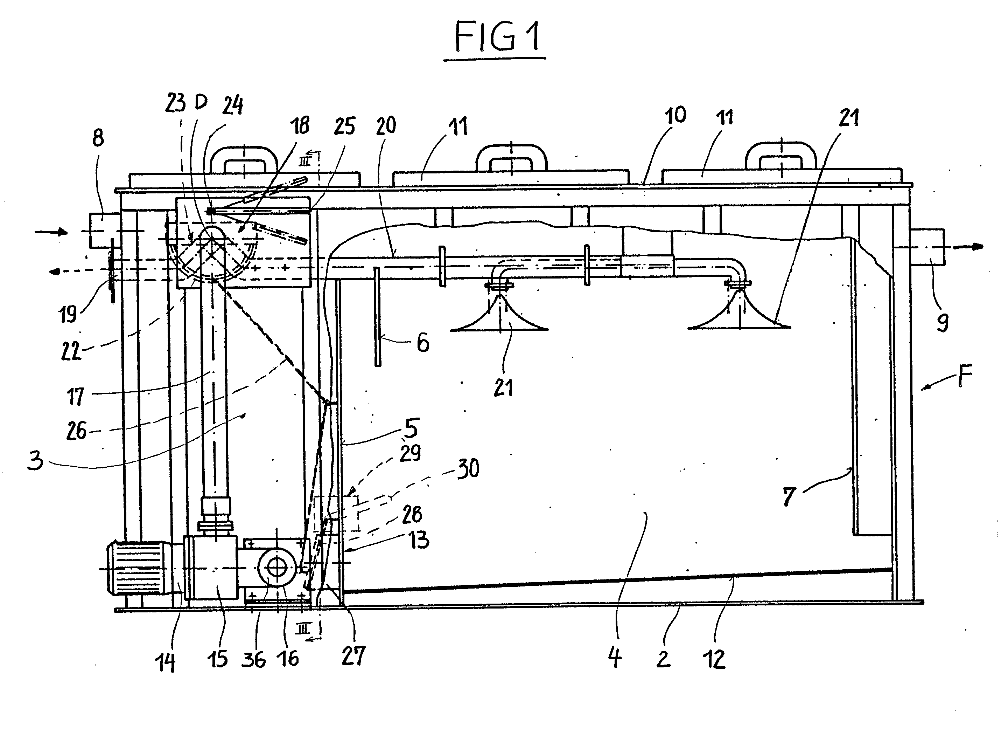

Ein Fettabscheider F gemäß den Figuren 1, 3, 4 und 5, besteht aus einem stationären Behälter 2, dessen Behälterinneres durch eine Trennwand 5 in eine zulaufseitige Schlammfangkammer 3 und eine ablaufseitige Abscheidekammer 4 unterteilt ist. Die Flüssigkeit mit den abzuscheidenden Bestandteilen kommt durch einen Zulauf 8 in die Schlammfangkammer 3, in der Feststoffanteile wie Fleisch, Knochen, Fell und dgl. zurückgehalten werden, und fließt dann über eine durch die Trennwand 5 definierte Überlaufschwelle in die Abscheidekammer 4, in der sich die Fettbestandteile an der Oberfläche abscheiden, ehe die auf diese Weise geklärte Flüssigkeit durch einen Ablauf 9 abströmt. Der Zulauf 8 und die Überlaufschwelle der Trennwand 5 fliegen geringfügig höher als der Ablauf 9. Eine Beruhigungswand 6 in einem Abstand von der Trennwand 5 hindert die in der Abscheidekammer 4 liegende Fettschicht daran, bis in die unmittelbare Näher der Trennwand 5 zu kommen. Eine weitere, nach unten gezogene Wand 7 hindert die Fettbestandteile daran, in den Ablauf 9 zu gelangen.

Der Behälter 2 ist oberseitig durch einen Dekkel 10 verschlossen, der mehrere große Öffnungen besitzt, auf denen abnehmbare Einzeldeckel 11 sitzen. In der Abscheidekammer 4 ist eine schräge Bodenwand 12 vorgesehen, die sich zur Trennwand 5 hin neigt. In der Trennwand 5 ist unterseitig eine Durchgangsöffnung 13 zur Schlammfangkammer 3 vorgesehen.

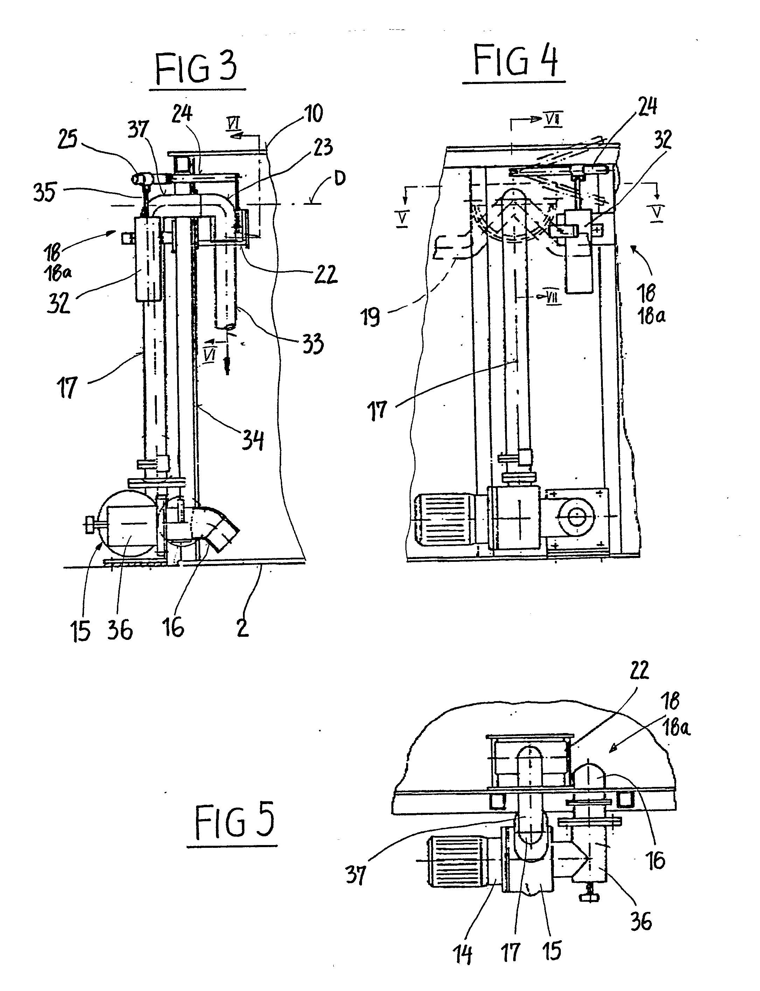

Zum Entsorgen des Inhalt des Fettabscheiders, zum Zirkulieren in der Schlammfangkammer 3 und zum Aufbrechen der Fettschicht in der Abscheidekammer 4, dient eine Pumpe 14, in die ein Zerförderer 15 baulich eingegliedert ist, und die sich an der Außenseite des Behälters 2 befindet. Saugseitig ist die Pumpe über einen Anschluß 16 mit einem Absperrschieber 36 an den Sumpf der Schlammfangkammer 3 angeschlossen. Druckseitig ist die Pumpe hingegen über ein vertikales Druckrohr 17 zu an der Außenseite des Behälters 2 mit einer Verteilervorrichtung 18 verbunden, die sich ins Behälterinnere hineinerstreckt. In der Verteilervorrichtung 18 ist das Druckrohr 17 wahlweise mit einer unterhalb des Zulaufes 8 aus dem Behälter herausgeführten Entsorgungsleitung 19, einer von der Schlammfangkammer 3 in die Abscheidekammer 4 führenden Aufbrechleitung 20 oder mit einer in der Schlammfangkammer 3 angeordneten, nach unten als Stichrohr verlaufenden Zirkulationsleitung 33 (Fig. 3) verbindbar. An die Aufbrechleitung 20 sind in der Abscheidekammer 4 mehrere Prallteller oder Tellerdüsen 21 in einer Höhenlage angeordnet, bei der sichergestellt ist, daß sie in der sich verfestigenden Fettschicht auf der Füllung der Abscheidekammer 4 liegen.

In der Verteilervorrichtung 18 ist (Fig. 1) im Behälterinneren ein stationärer, bogenförmiger Tragteil 22 vorgesehen, dessen Bogenkrümmung konzentrisch zu einer horizontalen und eine Seitenwand 34 (Fig. 3) des Behälters 2 durchsetzenden Drehachse liegt. In der Verteilervorrichtung 18 ist mit dem Druckrohr 17 ein Druckstutzen 23 verbunden, der um die Drehachse D derart verdrehbar ist, daß er wahlweise mit den Mündungen der drei Leitungen 19, 20 und 33 verbunden ist. Zum Verschwenken des Druckstutzens 33 dient ein Handhebel 25, dessen Stellwelle 24 parallel zur Drehachse D und in einem Abstand oberhalb dieser liegt. Zur Betätigung des Handhebels 25 kann ein Stelltrieb 32 (Fig. 3) vorgesehen sein.

In der Trennwand 5 ist bei der Öffnung 13 ein Dichtsitz 27 angeordnet, auf dem eine Klappe 28 aufliegt die in Richtung in die Schlammfangkammer 3 zum Öffnen hochschwenkbar ist. Bei der Ausführungsform gemäß Fig. 1 ist die Klappe 28 über eine Zwangssteuerung 26 mit der Verteilervorrichtung 18 derart gekoppelt, daß die Klappe 28 dann geöffnet wird, wenn der Druckstutzen 23 entweder mit der Entsorgungsleitung 19 oder mit der Aufbrechleitung 20 verbunden ist. Hingegen wird die Klappe 28 zugehalten, wenn der Druckstutzen 23 mit der Zirkulationsleitung 33 verbunden ist.

Alternativ ist bei 29 strichliert angedeutet, daß eine unabhängig von der Verstellvorrichtung 18 betätigbare Stellvorrichtung für die Klappenbewegung vorgesehen ist, bzw. daß hier ein seitlich zugänglicher Handhebel 30 ergriffen werden muß, um die Klappe zu öffnen oder zu schließen.

In den Fig. 3, 4 und 5 ist deutlicher zu erkennen, wie das außenliegende Druckrohr 17 parallel zur Seitenwand 34 verläuft und oben über einen als 90°-Krümmer ausgebildeten Endteil 37 ins Innere der Verteilervorrichtung 18 geführt ist, und dabei die Seitenwand 34 abgedichtet, durchsetzt und in ihr festgelegt ist. Ferner ist erkennbar, daß am Handhebel 25 an der Stellwelle 24 eine Kolbenstange 35 des Stelltriebes 32 angreift. Der Druckstutzen 23 ist ebenfalls ein 90°-Krümmer, der mit seinem einen Ende bei V mit dem Endteil 37 in einer Drehverbindung um die Drehachse D drehbar verbunden ist und mit seinem anderen Ende im Tragkörper 22 verschwenkbar ist.

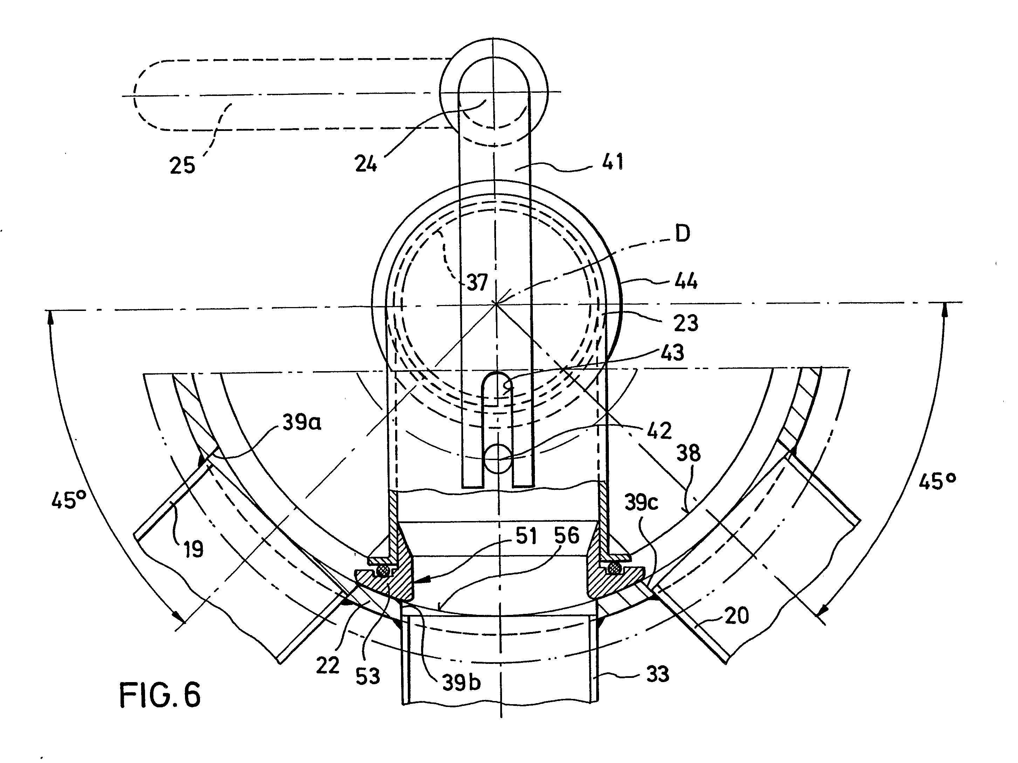

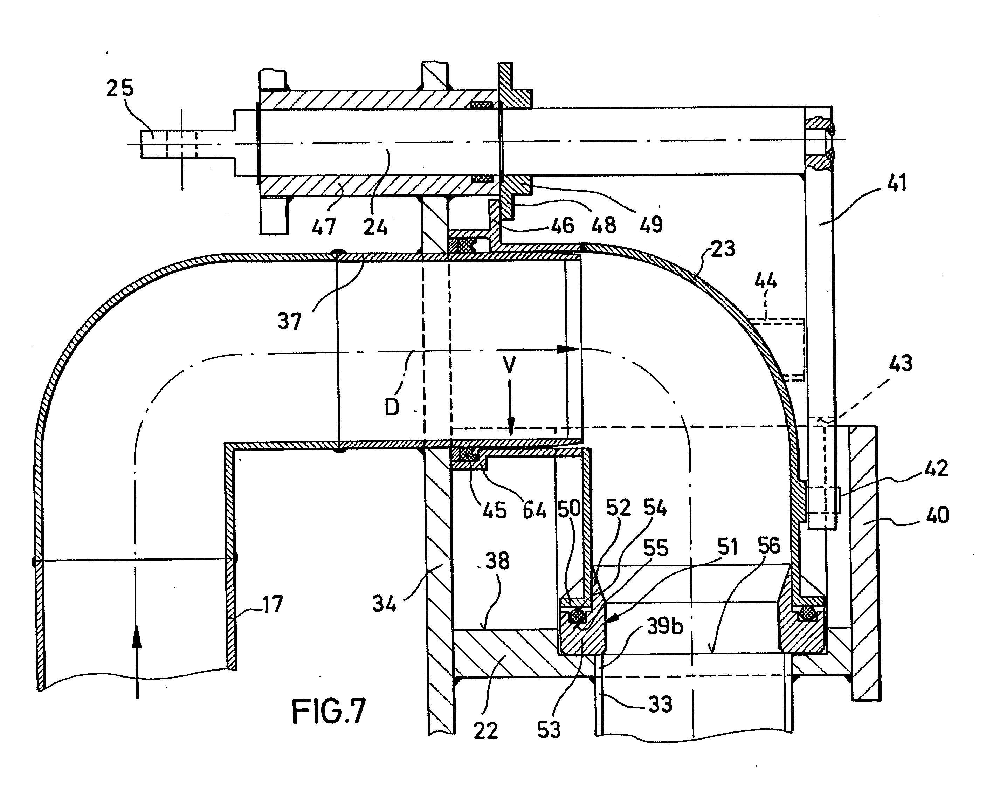

Im Detail zeigen die Figuren 6 und 7 als Schnitte in zwei zueinander 90° gedrehten Ebenen, daß der Tragkörper 22 mit der Seitenwand 34 verschweißt ist und eine innenliegende, halbkreisförmige Fläche 38 begrenzt, in der eine Führungsbahn 56 in Form einer U-förmigen Rinne für die Mündung des Druckstutzens 23 ausgeformt ist. In der Führungsbahn 56 liegen die drei Mündungen 39a der Entsorgungsleitung 19, 39b der Zirkulationsleitung 33 und 39c der Aufbrechleitung 20 mit Zwischenabständen hintereinander konzentrisch zur Drehachse D. Dieser Bereich des Tragkörpers 22 wird durch eine Versteifung 40 umgeben, die ebenfalls an der Seitenwand 34 angeschweißt ist.

An der Betätigungswelle 24, deren Hebel 25 außerhalb der Seitenwand liegt, ist am im Behälterinneren liegenden Ende ein Mitnehmer 41 festgeschweißt, der als Arm ausgebildet ist und mit einem am Druckstutzen 23 außenseitig angeordneten Mitnehmerzapfen 42 derart zusammenarbeitet, daß der Mitnehmerzapfen 42 in einen Längsschlitz 43 am freien Ende des Mitnehmers 41 eingreift.

Am Druckstutzen 23 ist ferner eine Druckkompensationsvorrichtung vorgesehen, die entweder als angeschweißter Fortsatz 44 (strichliert angedeutet) ausgebildet ist, oder von einem Ringflansch 46 und einem Gegenflansch 48 gebildet wird. Die Druckkompensationsvorrichtung soll vermeiden, daß der Druckstutzen 23 unter dem Druck aus dem Endteil 37 des Druckrohres 17 in Fig. 7 nach rechts gedrückt wird und sich dabei ggfs. verklemmt. Der Ringflansch 46 ist an einer Aufweitung 64 des als gerades Rohrstück 23a ausgebildeten Endes des Druckstutzens 23 angebracht, wobei die Aufweitung 64 stumpf an der Innenseite der Seitenwand 34 anliegt oder dieser knapp gegenüberliegt. Der Flansch 46 hintergreift den Gegenflansch 48, der auf der Betätigungswelle 24 mittels eines Ringes 49 so gesichert ist, daß er sich nicht nach rechts verlagern kann. Der Fortsatz 44 bei der alternativen Ausführungsform der Druckkompensationsvorrichtung stützt sich hingegen am Mitnehmer 41 ab, wenn sich der Druckstutzen 23 nach rechts verlagern möchte.

Der Druckstutzen 23 ist in der Drehverbindung V mit dem Endteil 37 verbunden, und zwar indem er mit seinem Endteil 23a auf den Endteil 37 aufgesteckt ist, wobei eine Dichtung 45 in der Aufweitung 64 den Aus- bzw. Eintritt von Flüssigkeiten verhindert.

Das andere Ende 50 des Druckstutzens 23 ist mit einem nach außen gerichteten Flansch umgeben. In das Ende 50 ist ein Mundstück 51 mit einem Spitzende 52 eingeschoben, das mit einem verdickten, umlaufenden Detail 53 in der Führungsbahn 56 verschiebbar ist. Eine Dichtung 54 in einer Ringnut 55 des Mundstücks 51 hält das Mundstück 51 im Abstand vom Ende 50 des Druckstutzens 23, so daß der Dichtring 54 als Federkomponente wirkt, mit der das Mundstück 51 auf die Laufbahn 56 gedrückt wird.

Durch Betätigung des Hebels 25 wird über den Mitnehmer 41 der Druckstutzen 23 jeweils so verschwenkt, daß sein Ende 50 mit einer der Mündungen 39a, 39b oder 39c fluchtet. Bei der Verstellung wird wegen des Abstandes zwischen der Achse der Betätigungswelle 24 und der Drehachse D der Mitnehmerzapfen 42 im Längsschlitz 43 wandern.

Anstelle der Drehverbindung V könnte auch zwischen dem Endteil 37 und dem Druckstutzen 23 ein Kugelgelenk vorgesehen sein, dessen horizontale Kugelachse dann die Drehachse des Druckstutzens 23 wäre.

Zum Reinigen des Fettabscheiders gemäß Fig. 1 wird nach Abstellen der Zufuhr der Druckstutzen 23 auf die Zirkulationsleitung 33 ausgerichtet. Bei eingeschalteter Pumpe 14 zirkuliert die Füllung der Schlammfangkammer 3 in dieser, wobei der Zerförderer alle festen Bestandteile soweit aufarbeitet, daß schließlich eine emulsionsartige Flüssigkeit vorliegt. Danach wird entweder der Druckstutzen 23 mit der Entsorgungsleitung 19 verbunden und die Füllung abgepumpt, oder es wird der Druckstutzen 23 mit der Aufbrechleitung 20 verbunden und die Fettschicht in der Abscheidekammer 4 mittels der Prallteller 21 aufgebrochen, so daß sich leicht entsorgbare, kleine Stückchen bilden. In diesem Fall wird erst dann der Druckstutzen 23 mit der Entsorgungsleitung verbunden und mit dem Abpumpen des Inhalts der Schlammfangkammer 3 begonnen. Dabei wird, ggfs. mit einer zeitlichen Verzögerung, die Klappe 28 geöffnet, so daß der Inhalt aus der Abscheidekammer 4 ebenfalls abgepumpt wird. Danach kann ggfs., wiederum mittels der Pumpe 14, 15 mit einer externen Spülflüssigkeit der gesamte Behälter gespült und abschließend gereinigt werden, ehe der Behälter wieder mit reinem Wasser gefüllt wird und dann wieder betriebsbereit ist, wenn der Wasserspiegel knapp an der Überlaufschwelle der Trennwand 5 steht.

Wird der Inhalt der Schlammfangkammer 3, weil er verhältnismäßig zähflüssig ist, zunächst entsorgt, dann kann die Klappe 28 so lange verschlossen bleiben und erst dann geöffnet werden, wenn die in der Abscheidekammer 4 unterhalb der Fettschicht vorliegende Flüssigkeit zum Aufbrechen über die Verteilervorrichtung 18 zu den Prallteller gepumpt wird.

Das Verstellen der Verteilervorrichtung 18 erfolgt entweder von Hand von der Seite des Behälters her oder mittels des Stelltriebes 32.

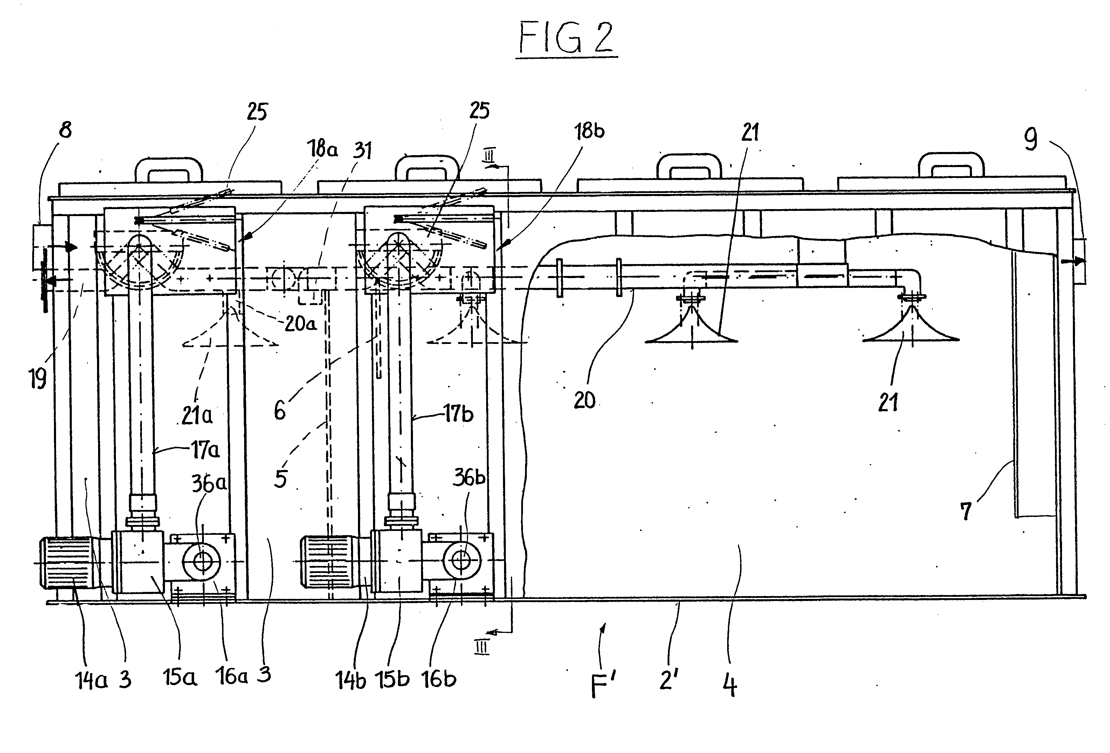

Die Ausführungsform des Fettabscheiders F' gemäß Fig. 2 unterscheidet sich von der vorhergehenden Ausführungsform dadurch, daß der Teil des Fettabscheiders mit der Pumpe, dem Zerförderer, dem Druckrohr und der Verteilervorrichtung doppelt vorhanden ist. Diese Teile sind deshalb mit dem Index a und b bezeichnet. Ferner ist auch in der Schlammfangkammer 3 ein Prallteller 21a vorgesehen, der zum Aufbrechen einer sich ggfs. in der Schlammfangkammer 3 oben absetzenden, starren Schicht benutzt wird. Die Verteilervorrichtung 18a der Schlammfangkammer 3 gestattet es wiederum, den Druckstutzen entweder an die Entsorgungsleitung 19, an eine Zirkulationsleitung 33 (nicht gezeigt) oder an die Aufbrechleitung 21 zur Abscheidekammer 4 hin anzuschließen. Ferner kann in der Verteilervorrichtung 18a eine zusätzliche Aufbrechstichleitung 20a vorgesehen und an den Druckstutzen anschließbar sein, mit der in der Schlammfangkammer 3 die Schicht aufgebrochen wird. Die Trennwand 5 ist ohne die in Fig. 1 gezeigte Öffnung 13 ausgebildet, weil der Inhalt der Abscheidekammer 4 mittels der zweiten Pumpe 14b und Ihrem Zerförderer 15b über den Absaugeanschluß 16b und den Absperrschieber 36b, ferner durch das Druckrohr 17b und die zweite Verteilervorrichtung 18b über einen Leitungsanschluß 31 in die Schlammfangkammer 3 hinübergepumpt wird. Die Verteilervorrichtung 18b ist im wesentlichen gleich aufgebaut wie die Verteilervorrichtung 18a bzw. 18.

Alternativ könnte die zweite Verteilervorrichtung 18b auch mit der Aufbrechstichleitung 20a über den Prallteller 21a in der Schlammfangkammer 3 verbindbar sein, damit zum Aufbrechen einer dort festgebackenen Schicht der dünnflüssige untere Teil der Füllung in der Abscheidekammer 4 benutzt werden kann, während gleichzeitig die erste Pumpe 14a mit ihrem Zerförderer 15a den Inhalt der Schlammfangkammer 3 durch die Entsorgungsleitung 19 abpumpt, damit nichts durch den Zulauf 8 hinausgedrückt wird.

Denkbar ist ferner, anstelle der Entsorgungsleitung 31 in die Schlammfangkammer 3 eine getrennt aus dem Behälter 2 herausgeführte Entsorgungsleitung vorzusehen, die sich außerhalb in der Art eines Hosenrohres dann mit der Entsorgungsleitung 19 vereinigt. Zwischen den beiden Strängen dieser Entsorgungsleitung ist zweckmäßigerweise ein Wechselventil vorgesehen oder es ist in jedem Strang ein Rückschlagventil vorgesehen, so daß bei Stillstand einer der Pumpen nicht die abgepumpte Flüssigkeit in die andere Kammer zurückgedrückt wird.

Beim Reinigen des Fettabscheiders F' wird zunächst die Füllung jeder Kammer 3, 4 zum Zirkulieren bzw. Aufbrechen im Kreislauf gepumpt. Danach wird der Inhalt der Schlammfangkammer 3 mittels der ersten Pumpe 14a, 15a in die Entsorgungsleitung 19 gepumpt, während gleichzeitig die zweite Pumpe 14b, 15b den Inhalt der Abscheidekammer 4 in die Schlammfangkammer 3 hinüberpumpt, von wo er dann ebenfalls entsorgt wird. Beide Pumpen können alternierend oder auch gleichzeitig betrieben werden. Für die Handhebel der beiden Verteilervorrichtungen 18a und 18b können wie bei Fig. 1 Stelltriebe vorgesehen sein. Für den Fall, daß mit der zweiten Pumpe 14b, 15b die Füllung der Abscheidekammer 4 zum Aufbrechen der Fettschicht in der Abscheidekammer 4 benutzt wird, führt die Aufbrechleitung 20 von der Schlammfangkammer 3 nur bis zum Prallteller 21 in der Schlammfangkammer 3 und nicht bis zu den Pralltellern 21 in der Abscheidekammer 4.

Bei beiden Ausführungsformen liegen zweckmäßigerweise die Verteilervorrichtung (en) und die verschiedenen Rohrleitungen oberhalb des höchsten Niveaus in beiden Kammern 3, 4, so daß diese Komponenten der Fettabscheider nicht zu stark verschmutzen. Nicht dargestellte Schauglasöffnungen in den Kammern gestatten eine visuelle Kontrolle von außen. Der Behälter 2′ bei der zweiten Ausführungsform des Fettabscheiders F′ kann wesentlich größer sein als der Behälter 2 bei Fig. 1, weil durch die doppelte Anordnung der Pumpen der Verteilervorrichtungen eine höhere Entsorgungs- und Reinigungsleistung und damit eine größere Abscheidekapazität des Fettabscheiders F′ erreicht wird.

**Ansprüche**

1. Fettabscheider, mit einem Behälter, der eine zulaufseitige Schlammfangkammer und eine ablaufseitige Abscheidekammer enthält, mit wenigstens einer Pumpe, die saugseitig an die Schlammfangkammer und druckseitig über eine Verteilervorrichtung wahlweise mindestens an eine Entsorgungsleitung, eine Zirkulationsleitung oder an eine Leitung zum Aufreißen der Schwimmstoffschicht anschließbar ist, und mit einem um eine Drehachse zwischen mehreren Stellungen hin- und herverschwenkbaren, mit der Druckseite der Pumpe verbundenen Rohrelement, dessen Mündung in den Schwenkstellungen jeweils auf eine Anschlußmündung ausgerichtet ist, dadurch gekennzeichnet, daß das Rohrelement ein in der Verteilervorrichtung (18, 18a, 18b) bewegbar gelagerter Druckstutzen (23) ist, der mit stationären Druckrohr (17, 37; 17a, 17b) der Pumpe über eine Drehverbindung (v) gekuppelt ist, und daß die Drehachse der Drehverbindung (V) horizontal liegt und die Drehachse (D) für die Schwenkbewegung des Druckstutzens (23) bildet.

2. Fettabscheider nach Anspruch 1, dadurch gekennzeichnet, daß der Druckstutzen (23) ein 90°-Rohrkrümmer ist, dessen eines Ende (23a) in der Drehverbindung (V) koaxial auf bzw. in das Ende (37) der Druckleitung (17, 17a, 17b) der Pumpe (14, 14a, 14b) gesteckt ist.

3. Fettabscheider nach Anspruch 1, dadurch gekennzeichnet, daß die Drehverbindung als Kugelgelenk zwischen dem einen Ende des Druckstutzens (23) und dem Ende der Druckleitung (17, 17a, 17b) der Pumpe (14, 14a, 14b) ausgebildet ist.

4. Fettabscheider nach einem der Ansprüche 1 bis 3, dadurch gekennzeichnet, daß die Verteilervorrichtung (18, 18a, 18b) in einer Seitenwand (34) des Behälters (2, 2′) angeordnet ist, daß die Pumpe (14, 14a, 14b) mit ihrem Druckrohr (17, 17a, 17b) an der Außenseite des Behälters (2, 2′) liegt, daß das Druckrohr (17, 17a, 17b) der Pumpe mit einem gekrümmten Anschlußende (37) an die Verteilervorrichtung (18, 18a, 18b) angeschlossen und an der Seitenwand (34) festgelegt ist, und daß in einem Abstand zur Drehachse (D) des Druckstutzens (23) eine zur Drehachse (D) parallele Betätigungswelle (24) die Seitenwand (34) durchsetzt, an der außenseitig ein Betätigungshebel (25) und innenseitig ein mit dem Druckstutzen (23) gekuppelter Mitnehmer (41) angebracht sind.

5. Fettabscheider nach Anspruch 4, dadurch gekennzeichnet, daß der Mitnehmer (41) zwischen der Drehachse (D) und der Mündung (50) des Druckstutzens (23), vorzugsweise benachbart zur Mündung (50), mit dem Druckstutzen (23) gekuppelt ist.

6. Fettabscheider nach Anspruch 4, dadurch gekennzeichnet, daß zwischen dem Druckstutzen (23) und der Betätigungswelle (24) bzw. zwischen dem Druckstutzen (23) und dem Mitnehmer (41) eine Druckkompensationsvorrichtung (46, 48; 44) vorgesehen ist.

7. Fettabscheider nach Anspruch 1, dadurch gekennzeichnet, daß die Führungsbahn (56) als zur Drehachse (D) konzentrische Rinne im Tragteil (22) ausgebildet ist.

8. Fettabscheider nach Anspruch 1 oder 5, dadurch gekennzeichnet, daß an der Mündung (50) des Druckstutzens (23) ein gefedertes Mundstück (51) angebracht ist.

9. Fettabscheider, insbesondere nach einem der Ansprüche 1 bis 8, wobei in der Trennwand bodennahe wenigstens eine Öffnung mit einer zwischen einer Schließ- und einer Öffnungsstellung bewegbaren Klappe vorgesehen ist, dadurch gekennzeichnet, daß eine Zwangssteuerung (26, 29) für die Bewegung der Klappe (28) vorgesehen ist.

10. Fettabscheider nach Anspruch 9, dadurch gekennzeichnet, daß die Zwangssteuerung (29) unabhängig von der Verteilervorrichtung (18) von außen betätigbar ist.

11. Fettabscheider nach einem der Ansprüche 1 bis 8, dadurch gekennzeichnet, daß eine zweite, außenliegende Pumpe (14b) vorgesehen ist, die saugseitig an die Abscheidekammer (4) und druckseitig an eine zweite Verteilervorrichtung (18b) in der Abscheidekammer (4) angeschlossen ist, und daß die zweite Pumpe (14b) mittels der zweiten Verteilervorrichtung (18b) wahlweise an die Leitung (20) zum Aufreißen der Schwimmstoffschicht an eine Zirkulationsleitung in der Abscheidekammer (4) oder an eine zweite Entsorgungsleitung (31) anschließbar ist.

12. Fettabscheider nach Anspruch 11, dadurch gekennzeichnet, daß die zweite Entsorgungsleitung (31) von der zweiten Verteilervorrichtung (18b) zurück in die Schlammfangkammer (3) führt.

13. Fettabscheider nach Anspruch 11, dadurch gekennzeichnet, daß die zweite Entsorgungsleitung (31) getrennt von der ersten Entsorgungsleitung (19) aus dem Behälter (2) führt.

14. Fettabscheider nach Anspruch 13, dadurch gekennzeichnet, daß die beiden Entsorgungsleitungen (19, 31) hosenrohrartig miteinander verbunden sind, vorzugsweise über ein Wechselventil oder über zwei Rückschlagventile.

15. Fettabscheider nach Anspruch 1, dadurch gekennzeichnet, daß in der Schlammfangkammer (3) unterhalb einer Überlaufschwelle der Trennwand (5) wenigstens ein Tellerventil (21a) vorgesehen ist, das entweder an die Leitung (20) zum Aufreißen der Schwimmstoffschicht oder an eine eigene, an die Ver teilervorrichtung (18) angeschlossene, über den Druckstutzen (23) beaufschlagbare Aufreißstichleitung (20a) angeschlossen ist.

16. Fettabscheider nach den Ansprüchen 12 und/oder 15, dadurch gekennzeichnet, daß das Tellerventil (21a) in der Schlammfangkammer (3) über die zweite Entsorgungsleitung an die zweite Verteilervorrichtung (18b) und damit an die zweite Pumpe (14b) anschließbar ist.

17. Fettabscheider nach den Ansprüchen 1 und 15, dadurch gekennzeichnet, daß die Pumpe(n) (14, 14a, 14b) baulich mit einem Zerförderer (15, 15a, 15b) vereinigt ist (sind).

# FIG 1

EP 0 355 327 A2

# FIG 2

EP 0 355 327 A2

## FIG 3

## FIG 4

## FIG 5

FIG.6

FIG.7

EP 0 355 327 A2